# FASCICULE DE BREVET EUROPEEN

(11) **EP 4 018 347 B1**
(45) Date de publication et mention de la délivrance du brevet: **11.03.2026**
(21) Numéro de dépôt: 20750712.0
(22) Date de dépôt: 15.07.2020
(51) Int. Cl.: G06F 21/57

(54) **PROCÉDÉ ET DISPOSITIF DE MISE À JOUR D'UN LOGICIEL D'UN CALCULATEUR EMBARQUÉ D'UN VÉHICULE, COMPORTANT UNE MÉMOIRE D'EXÉCUTION ET UNE MÉMOIRE DE SAUVEGARDE**
VERFAHREN UND VORRICHTUNG ZUR AKTUALISIERUNG DER SOFTWARE EINES FAHRZEUGBORDCOMPUTERS MIT EINEM LAUFZEITSPEICHER UND EINEM SICHERUNGSSPEICHER
METHOD AND DEVICE FOR UPDATING SOFTWARE OF AN ONBOARD COMPUTER OF A VEHICLE, COMPRISING A RUNTIME MEMORY AND A BACKUP MEMORY

(30) Priorité: 20.08.2019 FR 1909305
(43) Date de publication de la demande: 29.06.2022
(73) Titulaire: Stellantis Auto SAS, 78300 Poissy (FR)
(72) Inventeur: SCHMIDT, Pierre, 95240 CORMEILLES EN PARISIS (FR); ROCHETTE, Francois, 92150 SURESNES (FR); LOPEZ, Thierry, 78700 CONFLANS STE HONORINE (FR); GEORGES, Emmanuel, 78300 POISSY (FR)
(74) Mandataire: ESIP
(86) Numéro de dépôt international: PCT/FR2020/051266
(87) Numéro de publication internationale: WO 2021/032915

(56) Documents cités:
- EP-A2- 0 959 405
- US-A1- 2016 364 230
- US-A1- 2019 138 298

## Description

L'invention concerne la mise à jour logicielle d'un ou plusieurs calculateurs d'un véhicule automobile réalisée à distance d'un outil de diagnostic aussi appelée mise à jour OTA (pour Over The Air).

Dans la suite de la description, lorsque le fichier à télécharger contient des instructions ou le code exécutable d'un logiciel, on parlera également de téléchargement d'un logiciel.

La complexité croissante de la fonction électronique embarquée entraîne une multiplication des boîtiers électroniques (ou calculateurs) montés sur les véhicules automobiles.

Afin de limiter la diversité qui en résulte, il a été décidé de reporter lorsque cela est possible la diversité matérielle sur le logiciel et de pratiquer un téléchargement de ces calculateurs. L'opération est réalisée moyennant un outil débarqué qui se connecte sur la prise diagnostic du véhicule et permet de programmer dans la mémoire du ou des calculateurs le logiciel qui assure un fonctionnement conforme du véhicule produit en prenant en compte les caractéristiques (motorisation, options) propres à ce véhicule.

La communication entre l'outil et le ou les calculateurs fait généralement usage soit de la technologie CAN 500kbps connue de l'état de l'art actuel ou de la technologie Ethernet 100 Mbits/s en cours de déploiement dans le monde automobile afin de transférer les données à programmer.

On connaît déjà dans l'état de la technique des procédés et des systèmes de téléchargement de fichiers dans des calculateurs embarqués à bord de véhicules automobiles, tels que ceux décrits par exemple dans le document FR-A-2719924. Ce document détaille les différentes étapes successives de la procédure utilisée lors de l'assemblage des véhicules ou dans le réseau après-vente d'un constructeur, lors de la correction d'une prestation par échange de fichier.

Cependant, dans le but de rendre les véhicules toujours plus sûrs pour leurs clients, les constructeurs automobiles envisagent de pouvoir réaliser certaines mises à jour directement chez le client final, à l'image de ce qui existe déjà dans le domaine du consumériste pour un PC ou un smartphone par exemple. En effet, les moyens de connectivité présents dans les véhicules permettent déjà d'échanger de nombreuses informations avec l'extérieur (informations de trafic, de navigation, de données pour la réparation ou pour les assureurs, ...) et ces échanges sont en pleine expansion. Il en résulte une demande accrue pour la protection des données clients, mais aussi pour une protection importante de ces véhicules compte tenu des possibilités de cyber-attaque et du risque encouru sur la sécurité routière. En effet, lors de la détection d'une attaque de ce type et de la disponibilité d'un « patch » correctif (un logiciel ou module logiciel) en mesure d'en supprimer ou d'en réduire les risques, la vitesse à laquelle cette correction peut être installée revêt sans aucun doute un aspect primordial. Dans ce cas, une mise à jour OTA peut permettre de gagner beaucoup de temps en comparaison d'un rappel organisé des véhicules dans le garage du réseau agrée ou indépendant.

Pour pouvoir réaliser ce type d'opération directement chez le client final, il convient néanmoins de prendre en considérations plusieurs aspects qui ajoutent à la complexité de cette opération.

La mise à jour du logiciel d'un calculateur d'une automobile peut dans certains cas la rendre indisponible ou encore induire des conséquences importantes tant pour les occupants du véhicule que pour son environnement. C'est la raison pour laquelle la mise à jour en OTA de certains calculateurs et en particulier ceux qui sont associés à la dynamique du véhicule nécessitent un mécanisme appelé Rollback (ou retour en arrière, ou encore retour à un état précédent) qui permet de revenir à la configuration logicielle antérieure dans le cas de la détection d'un problème survenue pendant la mise à jour du logiciel d'un ou plusieurs calculateurs du véhicule.

Ce type de problème peut intervenir par exemple dans le cas où le calculateur destinataire essaye d'écrire une valeur sur une cellule mémoire corrompue par exemple, ou dans le cas d'une erreur de transmission due par exemple à un champ électromagnétique, ou d'autres cas encore.

Un tel type de problème est généralement détecté par le calculateur destinataire (par exemple au moyen d'une vérification d'un CRC Cyclic Redoundancy Check dans le cas d'une réception erronée). Dans ce cas, une information sera transmise au calculateur maitre pour demander l'exécution du processus de rollback.

On connait par exemple par le document US20190057214 un dispositif de commande de mise à jour qui comprend une première unité de communication, une seconde unité de communication, et une unité de commande. La première unité de communication est configurée pour recevoir des données de patch pour chaque bloc des logiciels et des premières données d'authentification pour chaque bloc d'authentification d'un logiciel dans un terminal mis à jour en utilisant les données de patch sur une base par bloc.

L'unité de commande est configurée pour demander au terminal d'effectuer un rollback pour restauration d'un premier bloc à un (M-1) ième bloc en utilisant les données de patch à réception d'un résultat de mise jour indiquant une défaillance dans une authentification d'un bloc Mième (M> 1).

Cette solution présente l'inconvénient de devoir générer des blocs de logiciels et de vérifier leur intégrité au cours de la procédure de rollback. Ceci augmente le risque d'échec de la procédure de rollback.

Le document EP 0959405 A2 divulgue un procédé de mise à jour d'un logiciel utilisant deux zones mémoire. L'une est active, l'autre passive. La nouvelle version est chargée dans la zone mémoire passive. Après l'installation, la zone mémoire passive devient active et inversement.

Le document US 2016/0364230 A1 divulgue une mise à jour partielle d'un calculateur qui est embarqué d'un véhicule

Un objet de la présente invention est de proposer une solution pour remettre rapidement à un état précédent une mise à jour logicielle un calculateur d'un véhicule en particulier lorsqu'un fichier de mise à jour est corrompu.

L'invention concerne en particulier un procédé d'installation d'une mise à jour d'un logiciel d'un calculateur embarqué d'un véhicule, comportant une mémoire comprenant une première zone dans laquelle est stocké un logiciel courant, une deuxième zone et un pointeur indiquant au calculateur quelles instructions exécuter, ledit pointeur indiquant la première zone mémoire, selon la revendication 1.

L'invention a pour avantage lorsqu'un test d'intégrité des données reçues abouti à un échec, de permettre d'interrompre sans délai la procédure d'installation et de continuer à utiliser le logiciel courant qui n'est pas modifié dans la mémoire d'exécution.

En outre une étape de rollback (par exemple, suite à un disfonctionnement constaté par un utilisateur), peut facilement être mise en œuvre en modifiant à nouveau le pointeur pour revenir au logiciel toujours présent dans la zone mémoire.

L'invention offre donc un gain de temps mais aussi une sécurité renforcée dans la mesure où elle élimine des risques supplémentaires de corruption des données inévitablement liées aux opérations successives de génération de bloc de logiciels au cours de la phase de rollback dans la solution de l'état de la technique.

Avantageusement, le procédé de mise à jour d'un logiciel d'un calculateur selon l'invention comporte en outre des étapes de :
- Emission d'une requête commandant une écriture de la mise à jour dans la deuxième zone,
- Emission d'une requête commandant une vérification de l'intégrité du logiciel mis à jour dans la deuxième zone.

Avantageusement, le procédé de mise à jour d'un logiciel d'un calculateur selon l'invention comporte en outre une étape de retour à un état précédent la mise à jour, ledit retour à un état précédent comportant une modification du pointeur, de sorte que celui indique la première zone mémoire.

Avantageusement, le procédé de mise à jour d'un logiciel d'un calculateur selon l'invention comporte en outre, consécutivement à une détection d'une erreur, une étape d'émission d'une requête commandant l'arrêt de l'installation de la mise à jour.

Avantageusement, l'arrêt de l'installation de la mise à jour comporte l'émission d'un message destiné au conducteur pour l'informer de l'arrêt de l'installation.

Avantageusement, le procédé de mise à jour d'un logiciel d'un calculateur selon l'invention comporte en outre, une étape d'émission d'une requête commandant une vérification de l'intégrité du logiciel courant dans la deuxième zone.

Avantageusement, le procédé de mise à jour d'un logiciel d'un calculateur selon l'invention comporte en outre, une étape d'émission d'une requête commandant une vérification de l'intégrité du logiciel mis à jour dans la deuxième zone.

L'invention concerne aussi un dispositif de mise à jour d'un logiciel d'un calculateur, ledit dispositif comprenant une mémoire associée à au moins un processeur configuré pour mettre en œuvre les étapes du procédé selon l'invention.

L'invention concerne aussi un véhicule caractérisé en ce qu'il comporte un dispositif de mise à jour d'un logiciel d'un calculateur selon l'invention.

D'autres caractéristiques et avantages de l'invention ressortiront de la description des modes de réalisation non limitatifs de l'invention ci-après, en référence aux figures annexées, sur lesquelles :
[Fig. 1] illustre de façon schématique un système, selon un exemple de réalisation particulier de la présente invention ;
[Fig. 2] illustre de façon schématique un calculateur, selon un exemple de réalisation particulier de la présente invention;
[Fig. 3] illustre schématiquement un procédé de mise à jour, selon un exemple de réalisation particulier de la présente invention.
[Fig 4] illustre un exemple des états successifs de mémoires d'un calculateur au cours d'une mise à jour.

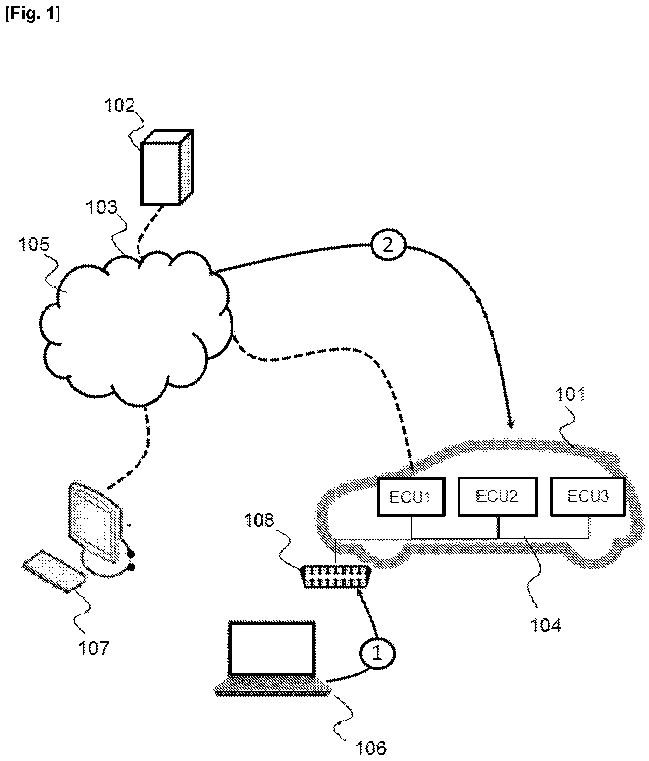

En référence à la figure 1, le système selon l'invention comporte un véhicule 101 connecté à un serveur 102 de mise à jour distant.

Le véhicule 101 comprend une pluralité de calculateurs ECU1, ECU2, ECU3 dont une unité de communication embarquée qui communique avec le serveur 102, par l'intermédiaire d'une connexion sans fil. Typiquement, la connexion ou liaison sans fil est une connexion par ondes radio (3G, 4G,...).

Les calculateurs ECU1, ECU2, ECU3 communiquent entre eux par l'intermédiaire d'un bus de données 104 (par exemple de type CAN).

Le serveur débarqué 102 est par exemple un calculateur générique comportant au moins une mémoire et un processeur.

Le véhicule 101 et le serveur débarqué 102 communique via un réseau étendu 105 tel que un réseau de communication fixe 103 (ou WAN pour "Wide Area Network"), par exemple le réseau Internet auquel véhicule se connecte par une liaison sans fil (3G, 4G,...).

Le calculateur ECU1 aussi appelé calculateur de gestion de mise à jour (ou encore FOTA Master - pour Firmware Over-The-Air) qui permet la mise à jour des calculateurs ECU2 à ECU3, dispose à cet effet des mécanismes capables de transférer les fichiers de données reçues en trames attendues par les calculateurs ECU2, ECU3 destinataires pour installer leur logiciel. A noter que le calculateur jouant le rôle de FOTA master dans un véhicule peut ou non être le même calculateur que celui qui dispose des fonctions de communication sans fils.

Un opérateur via un terminal 107 peut réaliser les vérifications et transmet des instructions à distance au véhicule 101. Ces instructions sont transmises au véhicule 101 par voie d'onde qui peut être de la 4G, du WIFI ou toute autre technologie de communication sans fil à venir.

Les calculateurs ECU1, ECU2, ECU3 peuvent être mis à jour dans un garage. La mise à jour d'un logiciel dans un garage répond à une procédure spécifique (cas 1 de la figure 1) au cours de laquelle, l'opérateur devient responsable du véhicule qui lui a été confié. A cet égard, il place le véhicule dans un environnement « safe and secure » avant de lancer cette opération à partir d'un outil 106 branché sur une prise dédiée 108 du véhicule 101 Puis une fois l'opération terminée, il effectue certains contrôles afin de s'assurer de son bon fonctionnement. En cas de problème détecté, soit lors du déroulement de la procédure ou après la mise à jour, le technicien prendra les mesures nécessaires à la correction de l'anomalie (nouvel essai, changement de pièce, ...) avant de restituer le véhicule au client. Le garagiste est donc à ce titre un maillon important de la chaine safety mais est aussi en charge de s'assurer de la qualité de l'opération réalisée.

Lors d'une mise à jour OTA chez un client (cas 2 de la figure 1), rien de tout cela n'est possible et il convient donc d'ajouter dans chaque calculateur un mécanisme permettant de revenir à la version antérieure en cas de problème.

Pour réaliser les opérations décrites dans cette proposition de brevet, le FOTA master communique avec le calculateur cible via le réseau de communication disponible dans le véhicule (par exemple CAN, Ethernet ou autre). Il utilise pour cela un protocole de communication dédié, comme par exemple, le protocole UDS (norme ISO14229) couramment employé pour réaliser le diagnostic ou le téléchargement du logiciel des calculateurs embarqués dans les véhicules automobiles.

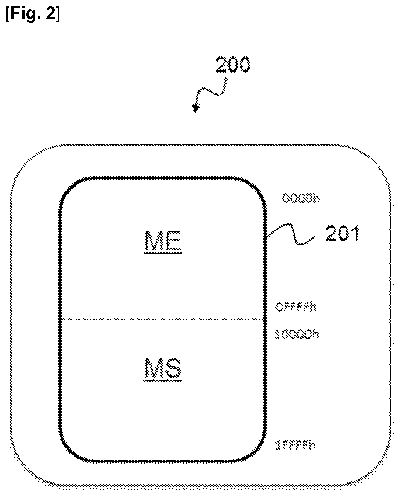

En référence à la figure 2, le calculateur 200 selon l'invention comporte un microcontrôleur muni d'une mémoire Flash 201. La mémoire flash 201 comporte :
- une première zone Z1, aussi appelée zone d'exécution, utilisée pour exécuter le logiciel téléchargé, et d'une taille au moins égale à une taille donnée N,
- une deuxième zone Z2, aussi appelée zone de sauvegarde, d'une taille au moins égale à la taille donnée N, utilisée comme mémoire de sauvegarde permettant de revenir à la version précédente du logiciel en cas de problème lors de l'installation,

La taille de la mémoire flash 201 est donc d'au moins deux fois la taille donnée N.

La Z2 peut être un module mémoire séparé de la mémoire d'exécution ou faire partie du même module mémoire en tant que zone contiguë à la première zone Z1.

Dans l'exemple de la figure 2 les plages d'adresses 00000h-0FFFFh (h pour hexadécimal) et 10000h-1 FFFFh correspondant respectivement à la première Z1 puis à la deuxième zone Z2. Ce mécanisme de ségrégation du ou des mémoires en 2 zones implémenté dans le hardware du microcontrôleur par le fondeur, doit donc faire partie de la liste des caractéristiques natives du composant pour être disponible. Le principe de sélection de la zone mémoire du logiciel à exécuter est réalisée à l'aide d'un premier pointeur que nous appellerons « Base address ». Il contient une information sous la forme d'une adresse mémoire qui indique si le microcontrôleur doit aller chercher les instructions à exécuter dans la première Z1 ou dans la deuxième zone mémoire Z2. Sur l'exemple de la figure 2, ce premier pointeur ne peut donc prendre que 2 valeurs : 00000h si le logiciel à exécuter est situé dans la première banque, 10000h si le logiciel est situé dans la seconde banque. Puis à ce premier pointeur, peut s'ajouter selon un procédé natif du microcontrôleur, l'adresse de l'instruction à exécuter. L'adresse résultante nommée « memory address » permet de récupérer l'instruction courante à exécuter dans la bonne zone mémoire.

Dans la suite de la description, on verra que l'activation d'une mise à jour nouvellement installée consiste donc simplement à modifier le paramètre « Base address » avec l'adresse de base de la zone contenant le logiciel mis à jour (version N+1). De même, un rollback est réalisé en inscrivant dans « Base address », l'adresse de base de la zone mémoire contenant la version précédente (version N).

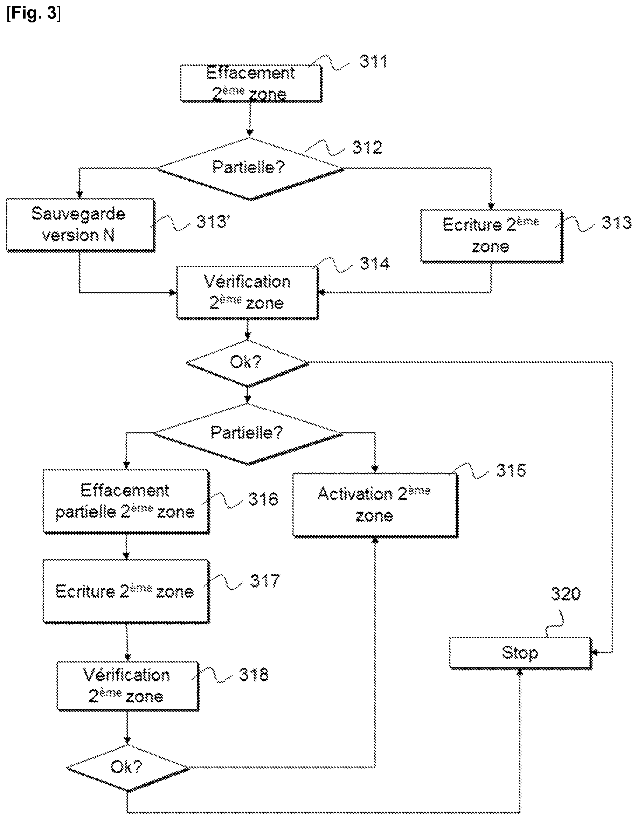

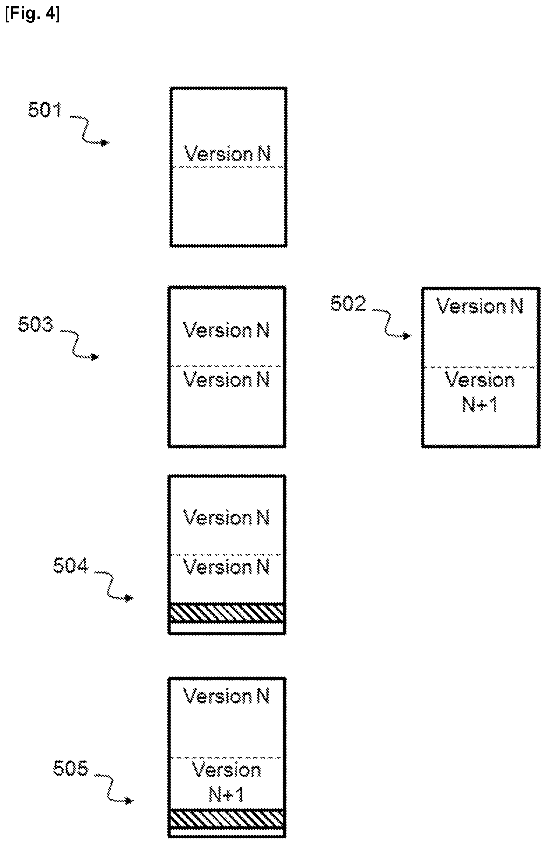

On va maintenant présenter le procédé selon l'invention à l'appui de la figure 3, illustrant des étapes dudit procédé et de la figure 4, montrant un exemple de mise en œuvre dudit procédé.

Dans l'exemple de la figure 4, le calculateur à mettre à jour 200, ou calculateur cible, dispose d'un logiciel (version N) dans sa mémoire d'exécution Z1.

Avantageusement, avant la mise à jour du calculateur cible, le FOTA master place le calculateur 200 dans un état dédié à la programmation (où le fonctionnel est désactivé) en utilisant une requête d'entrée en session reprogrammation. Le calculateur cible 200 accepte d'exécuter cette requête uniquement si les conditions sécuritaires sont remplies (ex : véhicule à l'arrêt, chaîne de traction désactivée, etc.)

En session reprogrammation, le FOTA master communique directement avec le logiciel de boot du calculateur cible 200. En fonction des requêtes envoyées par le FOTA master, le logiciel de boot du calculateur peut exécuter différentes opérations (écriture, copie, contrôle d'intégrité) sur l'une des deux mémoires dont il dispose (mémoire d'exécution ME ou mémoire de sauvegarde MS). La figure 3 décrit une succession d'actions à réaliser par le FOTA master pour installer un nouveau logiciel dans le calculateur cible 200.

Avant l'exécution du procédé de mise à jour selon l'invention, le calculateur cible 200 se trouve dans un premier état 501, dit état initial, dans lequel : la première zone Z1 comporte le logiciel courant (version N).

Dans une première étape 311, le FOTA master envoie une requête pour demander au calculateur cible 200 d'effacer la deuxième zone Z2.

Dans une deuxième étape 312, le FOTA master détermine si la mise à jour correspond à une installation complète ou partielle du nouveau logiciel. Par installation complète, on entend que la mise à jour téléchargée par le FOTA master comprend l'intégralité du logiciel n+1 et qu'il n'est pas nécessaire de tenir compte du logiciel n actuel pour constituer la nouvelle version. Au contraire, une installation partielle ne transmet qu'une portion du logiciel à mettre à jour, qui doit être complétée par la partie du logiciel n non modifiée.

Si la mise à jour correspond à une installation complète, le FOTA master envoie 313 au calculateur cible la mise à jour et commande son écriture dans la deuxième zone Z2.

Le FOTA master envoie 314 ensuite une requête pour demander au calculateur cible de contrôler l'intégrité des données copiées dans la deuxième zone Z2. Cette vérification peut être réalisée à l'aide d'un CRC Cyclic Redoundancy Check ou toute autre méthode connue de l'état de l'art (exemple : calcul, à l'aide d'une fonction de hachage, d'un « condensat » du contenu des données et comparaison du résultat avec une valeur de référence transmise au préalable par le FOTA master). Si la mémoire est composée de plusieurs blocs de données, chaque bloc dispose de son propre mécanisme de contrôle d'intégrité (basé sur la même méthode ou des méthodes différentes).

A l'issue de cette étape le calculateur cible 200 se trouve dans un deuxième état 502, dans lequel : la première zone Z1 comporte le logiciel courant (version N) et la deuxième zone Z2 comporte le logiciel mis à jour (version N+1).

Le FOTA master commande alors l'activation 315 du logiciel mis à jour (version N+1).

La partie ci-après décrit les étapes de procédé si la mise à jour ne correspond pas à une installation complète. La mise à jour que contient le FOTA master ne comprend pas l'intégralité des données.

Le FOTA master envoie une requête commandant la recopie 313' du logiciel courant (version N) depuis la première zone Z1 vers la deuxième zone Z2.

Le FOTA master envoie ensuite une requête commandant de vérifier 314 l'intégrité des données dans la mémoire de sauvegarde Z2, autrement des données constituant le duplicata. Ces 2 opérations sont déclenchées et supervisées par un jeu de requêtes UDS échangées entre FOTA master et le calculateur cible, mais se déroulent en interne du calculateur cible. En cas de résultat négatif, le FOTA master interrompt l'installation et le calculateur cible continuera d'exécuter l'application stockée dans la première zone Z1 à l'issue de la tentative d'installation.

A l'issue de cette étape le calculateur cible 200 se trouve dans un troisième état 503, dans lequel : la première zone Z1 comporte le logiciel courant (version N) et la deuxième zone Z2 comporte une copie du logiciel courant (version N).

Lorsque le test d'intégrité est positif, la suite de l'installation comporte un effacement 316 de la partie (ou portion) de mémoire qui correspond à l'emplacement de stockage de la mise à jour afin que cette dernière puisse être inscrite en complément des données déjà présente dans la deuxième zone Z2 et qui sont issues de la recopie préalable de la version N.

A l'issue de cette étape le calculateur cible 200 se trouve dans un troisième état 504, dans lequel : la première zone Z1 comporte le logiciel courant (version N) et la deuxième zone Z2 comporte une copie du logiciel courant (version N) de laquelle a été retirée par effacement mémoire, la portion à mettre à jour.

Ensuite, le FOTA master transmet 317 les données correspondant à la mise à jour vers le calculateur cible qui va écrire ces données dans la deuxième zone Z2 afin de compléter les données déjà présentes et construire ainsi la version N+1 et aboutir ainsi à l'état 505.

Le FOTA master commande un nouveau test d'intégrité 318 sur l'ensemble de la deuxième zone Z2 afin de prendre en compte la modification liée à la portion de logiciel nouvellement installée.

Le FOTA master commande alors l'activation 315 du logiciel mis à jour (version N+1).

A noter que quelle que soit la phase de l'installation, plus particulièrement l'opération consistant à programmer la mise à jour, si une erreur est détectée (erreur de programmation de la mémoire Flash, réponse négative après plusieurs tentatives), le FOTA master interrompt 320 l'installation sans activer le logiciel de la deuxième zone Z2. L'utilisation du véhicule reste alors possible en continuant d'exécuter le logiciel contenu dans première zone Z1. Un message d'erreur est alors affiché signalant l'échec de l'installation au client qui doit alors déposer son véhicule dans un garage.

Si à l'issue d'une installation réussie, il s'avère qu'un fonctionnement anormal du véhicule est détecté par le client, un retour à la version précédente (version N) est possible en pratiquant un rollback. Ce dernier consiste dans le cas de la mémoire double bank en une simple réactivation de l'exécution du logiciel encore présent dans première zone (Z1). Aucune recopie n'est nécessaire, l'opération de rollback consistant ici à réaffecter le pointeur d'exécution à la première zone (Z1), si bien qu'à chaque mise sous tension du calculateur (démarrage véhicule) le logiciel qui s'exécutera sera celui de la première zone (Z1).

Précisons que dans le cas de l'installation partielle, par souci de simplification un seul module a été représenté, mais il est tout à fait envisageable d'installer plusieurs modules dans la mémoire Flash, qu'ils soient contigus ou non. Le ou les emplacements qui reçoivent la mise à jour, sont spécifiés dans les paramètres des requêtes d'effacement puis d'écritures.

L'étape d'activation 315, ou l'exécution d'un éventuel rollback, s'opèrent par simple réaffectation de l'adresse d'exécution à la zone mémoire contenant le nouveau logiciel (activation) ou celle contenant l'ancienne version servant de mémoire de sauvegarde (rollback) selon un mécanisme connu de l'état de l'art.

On peut noter que les affectations « mémoire d'exécution » (ou zone d'exécution) et « mémoire de sauvegarde » (ou zone de sauvegarde) ne sont donc pas fixes puisqu'une banque donnée devient à chaque mise à jour alternativement mémoire d'exécution puis mémoire de sauvegarde. En effet lorsqu'une mise à jour réussie est éprouvée du point de vue de la prestation qu'elle est censée assurer (pas de rollback déclenché par le client pendant un certain temps), la mémoire de sauvegarde devient disponible pour accueillir une éventuelle nouvelle mise à jour et ce sera alors la mémoire d'exécution qui deviendra mémoire de sauvegarde lors de l'installation de la nouvelle mise à jour. A chaque mise à jour réussie, les affectations mémoire d'exécution et mémoire de rollback s'inversent donc.

On peut aussi noter que par souci de simplification, seul le cas de sortie lié à un échec survenant au cours du test d'intégrité a été représenté sur la figure 3. Le bon déroulement de la procédure d'installation est cependant bien supervisé au cours de chaque étape, plus particulièrement l'effacement de la mémoire et la phase de transfert-écriture des données en mémoire depuis le FOTA master. Si une erreur survient après plusieurs (par exemple 3) tentatives, la procédure d'installation prend fin ce qui se solde par un échec de la mise à jour.

## Revendications

1. Procédé d'installation d'une mise à jour d'un logiciel d'un calculateur embarqué (200) d'un véhicule (100), comportant une mémoire (201) comprenant une première zone (Z1) dans laquelle est stocké un logiciel courant, une deuxième zone (Z2) et un pointeur indiquant au calculateur quelles instructions exécuter, ledit pointeur indiquant la première zone mémoire (Z1), **caractérisé en ce qu'**il comporte des étapes de :
- téléchargement, par un calculateur de gestion de mise à jour, d'un logiciel à mettre à jour ou d'une portion de logiciel mis à jour, le calculateur de gestion de mise à jour communiquant avec le calculateur embarqué via un réseau de communication disponible dans le véhicule,
- Emission (311) d'une requête commandant un effacement de la deuxième zone (Z2),
- Détermination (312) si la mise à jour est partielle, et consécutivement à une détermination que la mise à jour est partielle :
- Emission (313') d'une requête commandant une copie du logiciel courant depuis la première zone (Z1) vers la deuxième zone (Z2),
- Emission (316) d'une requête commandant un effacement dans la deuxième zone mémoire (Z2) de ladite portion de logiciel à mettre à jour,
- Emission (317) d'une requête commandant une écriture des données correspondant à la mise à jour dans la deuxième zone mémoire (Z2) afin de compléter les données déjà présentes, de sorte à obtenir un logiciel mis à jour,
Et consécutivement à une détermination qu'aucune erreur n'est détectée, alors :
- Emission (315) d'une requête commandant une activation du logiciel mis à jour, ladite activation comportant une modification du pointeur, de sorte que celui-ci indique la deuxième zone mémoire (Z2).

2. Procédé de mise à jour d'un logiciel d'un calculateur selon la revendication 1 dans lequel la mise à jour est totale : ledit procédé comporte en outre des étapes :
- Emission (313) d'une requête commandant une écriture de la mise à jour dans la deuxième zone (Z2),
- **Emission (314)** d'une requête commandant une vérification de l'intégrité du logiciel mis à jour dans la deuxième zone (Z2).

3. Procédé de mise à jour d'un logiciel d'un calculateur selon l'une des revendications précédentes comportant en outre une étape de retour à un état précédent la mise à jour, ledit retour à un état précédent comportant une modification du pointeur, de sorte que celui indique la première zone mémoire (Z1).

4. Procédé de mise à jour d'un logiciel d'un calculateur selon l'une des revendications précédentes comportant en outre, consécutivement à une détection d'une erreur, une étape d'émission (320) d'une requête commandant l'arrêt de l'installation de la mise à jour.

5. Procédé de mise à jour d'un logiciel d'un calculateur selon la revendication précédente dans lequel commandant l'arrêt de l'installation de la mise à jour comporte l'émission d'un message destiné au conducteur pour l'informer de l'arrêt de l'installation.

6. Procédé de mise à jour d'un logiciel d'un calculateur selon l'une des revendications précédentes comportant en outre, une étape d'émission (314) d'une requête commandant une vérification de l'intégrité du logiciel courant dans la deuxième zone (Z2).

7. Procédé de mise à jour d'un logiciel d'un calculateur selon l'une des revendications précédentes comportant en outre, une étape d'émission (318) d'une requête commandant une vérification de l'intégrité du logiciel mis à jour dans la deuxième zone (Z2).

8. Dispositif de mise à jour d'un logiciel d'un calculateur, ledit dispositif comprenant une mémoire associée à au moins un processeur configuré pour mettre en œuvre les étapes du procédé selon l'une quelconque des revendications 1 à 7.

9. Véhicule (100) **caractérisé en ce qu'**il comporte un dispositif de mise à jour d'un logiciel d'un calculateur selon la revendication précédente.

## Patentansprüche

1. Verfahren zum Installieren einer Software-Aktualisierung eines bordeigenen Rechners (200) eines Fahrzeugs (100), mit einem Speicher (201), der einen ersten Bereich (Z1), in dem eine laufende Software gespeichert ist, einen zweiten Bereich (Z2) und einen Zeiger umfasst, der dem Rechner anzeigt, welche Anweisungen auszuführen sind, wobei der Zeiger den ersten Speicherbereich (Z1) angibt, **dadurch gekennzeichnet, dass** es die Schritte umfasst :
- Herunterladen einer zu aktualisierenden Software oder eines Teils der aktualisierten Software durch einen Verwaltungsrechner für die Aktualisierung die über ein im Fahrzeug verfügbares Kommunikationsnetz mit dem bordeigenen Rechner kommuniziert,
- Senden (311) einer Anforderung, die eine Löschung des zweiten Bereichs (Z2) steuert,
- Bestimmen (312), ob die Aktualisierung partiell ist, und nach einer Feststellung, dass die Aktualisierung partiell ist:
- Senden (313') einer Anforderung, die eine Kopie der aktuellen Software von dem ersten Bereich (Z1) in den zweiten Bereich (Z2) steuert,
- Senden (316) einer Anforderung, die eine Löschung in dem zweiten Speicherbereich (Z2) des zu aktualisierenden Softwareteils steuert,
- Senden (317) einer Abfrage, die ein Schreiben der Daten, die der Aktualisierung entsprechen, in den zweiten Speicherbereich (Z2) steuert, um die bereits vorhandenen Daten zu vervollständigen, um eine aktualisierte Software zu erhalten,
und nach einer Feststellung, dass kein Fehler festgestellt wird, dann :
- Ausgabe (315) einer Abfrage, die eine Aktivierung der aktualisierten Software steuert, wobei die Aktivierung eine Änderung des Zeigers umfasst, sodass dieser den zweiten Speicherbereich (Z2) anzeigt.

2. Verfahren zum Aktualisieren von Computersoftware nach Anspruch 1, wobei die Aktualisierung vollständig ist: das Verfahren umfasst ferner die Schritte:
- Übertragen (313) einer Anforderung, die ein Schreiben der Aktualisierung in das zweite Feld (Z2) steuert,
- Übertragen (314) einer Anforderung, die eine Überprüfung der Integrität der aktualisierten Software in dem zweiten Feld (Z2) steuert.

3. Verfahren zum Aktualisieren einer Computersoftware nach einem der vorhergehenden Ansprüche, das des Weiteren einen Schritt des Rücksetzens in einen Zustand vor dem Aktualisieren umfasst, wobei das Rücksetzen in einen vorherigen Zustand eine Änderung des Zeigers umfasst, sodass derjenige den ersten Speicherbereich (Z1) anzeigt.

4. Verfahren zum Aktualisieren einer Computersoftware nach einem der vorhergehenden Ansprüche, das ferner nach dem Erkennen eines Fehlers einen Schritt des Ausgebens (320) einer Anforderung umfasst, die das Beenden der Installation der Aktualisierung steuert.

5. Verfahren zum Aktualisieren einer Computersoftware nach einem der vorhergehenden Ansprüche, wobei das Steuern des Anhaltens der Installation der Aktualisierung das Senden einer Nachricht an den Fahrer umfasst, um ihn über das Anhalten der Installation zu informieren.

6. Verfahren zum Aktualisieren einer Software eines Rechners nach einem der vorhergehenden Ansprüche, ferner mit einem Schritt des Ausgebens (314) einer Anforderung, die eine Überprüfung der Integrität der aktuellen Software in dem zweiten Bereich (Z2) steuert.

7. Verfahren zum Aktualisieren einer Software eines Rechners nach einem der vorhergehenden Ansprüche, ferner mit einem Schritt des Ausgebens (318) einer Anforderung, die eine Überprüfung der Integrität der aktualisierten Software in dem zweiten Bereich (Z2) steuert.

8. Vorrichtung zum Aktualisieren einer Computersoftware, wobei die Vorrichtung einen Speicher umfasst, der mit mindestens einem Prozessor verbunden ist, der so konfiguriert ist, dass er die Schritte des Verfahrens nach einem der Ansprüche 1 bis 7 ausführt.

9. Fahrzeug (100), **dadurch gekennzeichnet, dass** es eine Vorrichtung zur Aktualisierung einer Software eines Rechners nach dem vorhergehenden Anspruch umfasst.

## Claims

1. Method for installing an update of a software of an on-board computer (200) of a vehicle (100), comprising a memory (201) comprising a first zone (Z 1) in which a current software is stored, a second zone (Z 2) and a pointer indicating to the computer which instructions to execute, said pointer indicating the first memory zone (Z 1), wherein it comprises steps of:
- Downloading, by an update management computer, a software to be updated or an updated software portion, the update management computer communicating with the on-board computer via a communicating network available in the vehicle,
- Emission (311) of a request ordering an erasure of the second zone (Z 2),
- Determination (312) whether the update is partial, and following a determination that the update is partial:
- Emission (313 ') of a request ordering a copy of the current software from the first zone (Z 1) to the second zone (Z 2),
- Emission (316) of a request ordering an erasure in the second memory zone (Z 2) of said software portion to be updated,
- Emission (317) of a request ordering a writing of the data corresponding to the update in the second memory zone (Z 2) in order to complete the data already present, so as to obtain an updated software,
and a determination consecutively that no error is detected, then:
- Transmission (315) of a request ordering an activation of the updated software, said activation comprising a modification of the pointer, so that the latter indicates the second memory zone (Z 2).

2. Method for updating a software of a computer according to claim 1, wherein the updating is total: said method further comprises steps:
- Sending (313) of a request ordering a writing of the update in the second zone (Z 2),
- Sending (314) of a request ordering a checking of the integrity of the updated software in the second zone (Z 2).

3. Method for updating a software of a computer according to claim 1, further comprising a step of returning to a status previous the updating, said return to a previous status comprising a modification of the pointer, such that the pointer indicates the first memory zone.

4. Method for updating a software of a computer according to one of the previous claims further comprising, following an error detection, a step of sending (320) a request ordering the shutdown of the installation of the update.

5. Method for updating a software of a computer according to claim 1, wherein ordering the shutdown of the installation of the update comprises sending a message intended for the driver to inform him of the shutdown of the installation.

6. Method for updating a software of a computer according to one of the previous claims further comprising a step of sending (314) a request ordering a checking of the integrity of the current software in the second zone (Z 2).

7. Method for updating a software of a computer according to one of the previous claims further comprising a step of sending (318) a request ordering a checking of the integrity of the software updated in the second zone (Z 2).

8. Device for updating a software of a computer, said device comprising a memory associated with at least one processor configured to implement the steps of the method according to any one of claims 1 to 7.

9. Vehicle (100) comprising a device for updating a software of a computer according to the previous claim.
